# EUROPEAN PATENT APPLICATION

(11) **EP 4 459 917 A1**
(43) Date of publication of application: **06.11.2024**
(21) Application number: 22915119.6
(22) Date of filing: 29.12.2022
(51) Int. Cl.: H04L 5/00

(54) **COMMUNICATION METHOD AND APPARATUS, COMMUNICATION DEVICE, AND READABLE STORAGE MEDIUM**

(30) Priority: 31.12.2021 CN 202111673083
(71) Applicant: VIVO MOBILE COMMUNICATION CO., LTD., Dongguan, Guangdong 523863 (CN)
(72) Inventor: SUN, Peng, Dongguan, Guangdong 523863 (CN); YUAN, Yannan, Dongguan, Guangdong 523863 (CN)
(74) Representative: Conti, Marco
(86) International application number: PCT/CN2022/143641
(87) International publication number: WO 2023/125870

(57) **Abstract**

This application pertains to the field of communications technologies, and discloses a communication method and apparatus, a communication device, and a readable storage medium. The communication method in embodiments of this application includes: receiving, by a second end, first indication information, where the first indication information is used to indicate a processing mode of a target object at a reference point; and processing, by the second end, the target object at the reference point based on the processing mode.

## Description

### CROSS-REFERENCE TO RELATED APPLICATIONS

This application claims priority to Chinese Patent Application No. 202111673083.7, filed in China on December 31, 2021, which is incorporated herein by reference in its entirety.

### TECHNICAL FIELD

This application pertains to the field of communications technologies, and specifically relates to a communication method and apparatus, a communication device, and a readable storage medium.

### BACKGROUND

In the related art, a communication device in a wireless communications system usually processes a signal, data, or the like in a configured processing mode, for example, performs channel coding based on a mode agreed in a protocol. In such manner, the communication device has poor flexibility in processing the signal, data, or the like.

### SUMMARY

Embodiments of this application provide a communication method and apparatus, a communication device, and a readable storage medium to resolve a problem that a communication device has poor flexibility in processing a signal, data, or the like in the related art.

According to a first aspect, a communication method is provided and includes:
receiving, by a second end, first indication information, where the first indication information is used to indicate a processing mode of a target object at a reference point; and
processing, by the second end, the target object at the reference point based on the processing mode.

According to a second aspect, a communication method is provided and includes:
exchanging, by a first end with at least one second end, first indication information corresponding to a reference point, where the first indication information is used to indicate a processing mode of a target object at the reference point.

According to a third aspect, a communication apparatus is provided and includes:
a receiving module, configured to receive first indication information, where the first indication information is used to indicate a processing mode of a target object at a reference point; and
a processing module, configured to process the target object at the reference point based on the processing mode.

According to a fourth aspect, a communication apparatus is provided and includes:
a sending module, configured to exchange, with at least one second end, first indication information corresponding to a reference point, where the first indication information is used to indicate a processing mode of a target object at the reference point.

According to a fifth aspect, a communication device is provided and includes a processor and a memory. The memory stores a program or instructions capable of running on the processor. When the program or instructions are executed by the processor, the steps of the communication method according to the first aspect are implemented, or the steps of the communication method according to the second aspect are implemented.

According to a sixth aspect, a readable storage medium is provided. The readable storage medium stores a program or instructions. When the program or instructions are executed by a processor, the steps of the communication method according to the first aspect are implemented, or the steps of the communication method according to the second aspect are implemented.

According to a seventh aspect, a chip is provided. The chip includes a processor and a communication interface. The communication interface is coupled to the processor. The processor is configured to run a program or instructions to implement the steps of the communication method according to the first aspect or implement the steps of the communication method according to the second aspect.

According to an eighth aspect, a computer program product is provided. The computer program product is stored in a non-transitory storage medium. The computer program product is executed by at least one processor to implement the steps of the communication method according to the first aspect or implement the steps of the communication method according to the second aspect.

In the embodiments of this application, the first end exchanges the first indication information with the at least one second end to notify the second end of the processing mode of the target object at the reference point by using the first indication information, and then the second end can process the target object based on the processing mode of the target object at the reference point and the first indication information. In this way, the first end can also indicate the processing mode of the target object at the reference point to the second end, so that the communication device has higher flexibility in processing a signal, data, a service, or the like.

### BRIEF DESCRIPTION OF DRAWINGS

FIG. 1 is a block diagram of a wireless communications system to which an embodiment of this application may be applied;
FIG. 2 is a flowchart of a communication method according to an embodiment of this application;
FIG. 3 is a flowchart of another communication method according to an embodiment of this application;
FIG. 4 is a structural diagram of a communication apparatus according to an embodiment of this application;
FIG. 5 is a structural diagram of another communication apparatus according to an embodiment of this application;
FIG. 6 is a structural diagram of a communication device according to an embodiment of this application;
FIG. 7 is a structural diagram of a terminal according to an embodiment of this application;
FIG. 8 is a structural diagram of a network-side device according to an embodiment of this application; and
FIG. 9 is a structural diagram of another network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communications system.

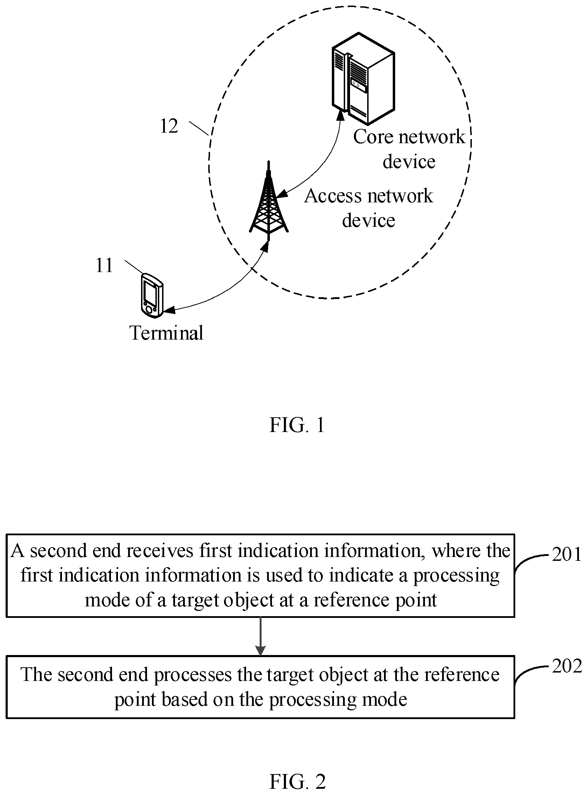

FIG. 1 is a block diagram of a wireless communications system to which an embodiment of this application may be applied. The wireless communications system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart j ewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

A communication method provided in the embodiments of this application is hereinafter described in detail by using some embodiments and application scenarios thereof with reference to the accompanying drawings.

FIG. 2 is a flowchart of a communication method according to an embodiment of this application. As shown in FIG. 2, the method includes the following steps.

Step 201: A second end receives first indication information, where the first indication information is used to indicate a processing mode of a target object at a reference point.

Step 202: The second end processes the target object at the reference point based on the processing mode.

In this embodiment of this application, a first end and the second end are communication devices with sending and receiving functions. For example, the first end is one of a network-side device and a terminal, and the second end is the other one of the network-side device and the terminal; or the first end and the second end are different nodes of a terminal; or the first end and the second end are different nodes of a network-side device.

It should be noted that the network-side device may include an access network device (for example, a base station) and a core network device. Optionally, the first end may be an access network device, and the second end is a core network device; or the first end is a terminal, and the second end is a core network device or an access network device; or the first end and the second end are different nodes of an access network device; or the first end and the second end are different nodes of a core network device, or the like. The rest are not exhaustively listed in this embodiment of this application. In addition, the first end and the second end are not specific designations. In some scenarios, the first end may also serve as the second end, as well as a third end, a fourth end, a fifth end, or the like mentioned in subsequent embodiments. Similarly, in some scenarios, the second end may also serve as the first end, as well as the third end, the fourth end, the fifth end, or the like mentioned in the subsequent embodiments.

In this embodiment of this application, the second end receives the first indication information, and the first indication information may be sent by the first end. Optionally, the first end may exchange the first indication information with at least one second end. For example, the first end broadcasts the first indication information to the at least one second end, or the first end directly sends the first indication information to the second end, or the first end may send the first indication information to the second end through another device. For example, a core network sends the first indication information to a base station, and then the base station sends the first indication information to a terminal.

It should be noted that the reference point may be a reference point predetermined by the first end and the second end. Optionally, the reference point is determined based on at least one of the following:
a predefinition;
a protocol agreement; and
second indication information sent by the third end, where the second indication information is used to indicate the reference point.

For example, a location of the reference point is agreed in the protocol, and then the first end and the second end can determine the location of the reference point based on the protocol agreement; or the third end may send, to the first end and/or the second end, the second indication information used to indicate the location of the reference point. If only the first end receives the second indication information, the first end may also send the second indication information to the second end. If only the second end receives the second indication information, the second end may also send the second indication information to the first end. Alternatively, the reference point may be predefined.

It should be noted that the reference point may be considered as an agreed processing position or processing interface or interactive interface or the like between two communication devices or between two functional modules, or considered as a protocol mapping relationship between two communication devices or between two functional modules. The following illustrates several reference points that may be applied in a communications system.

Optionally, a baseband received signal after analog-to-digital conversion (Analog to Digital, AD) and/or digital-to-analog conversion (Digital to Analog, DA) is defined as a reference point ReP.0.0.0;
a signal after inverse fast Fourier transform (Inverse Fast Fourier Transform, IFFT) is defined as a reference point ReP.0.0.1;
a resource-demapped signal (soft information) after a useful reference signal (Reference Signal, RS) is taken out is defined as a reference point ReP.0.0.2;
a signal corresponding to a decoded bit sequence is defined as a reference point ReP.0.0.3;
check and interpretation information for a bit sequence is defined as a reference point ReP.0.0.4;
a reference point corresponding to a point for delivering bit information to a media access control (Media Access Control, MAC) layer is defined as a ReP.0.0.5;
reference points corresponding to a physical downlink shared channel (Physical downlink shared channel, PDSCH) receiving link are defined as a ReP.0.1.1 to a ReP.0.1.3;
a bit sequence acknowledged (Acknowledged, ACK) and/or unacknowledged (Unacknowledged, NACK) after PDSCH decoding is defined as a reference point ReP.0.1.4;
a reference point corresponding to a point for delivering a transport block (Transport Block, TB) received on a PDSCH to the MAC layer is defined as a ReP.0.1.5;
a reference point (reference point, REP) corresponding to a physical uplink shared channel (Physical Uplink Shared Channel, PUSCH) sending link that receives a TB block from the MAC layer is defined as a ReP.0.2.0;
a reference point corresponding to a PUSCH after channel coding is defined as a ReP.0.2.1;
a reference point after PUSCH coding and modulation is defined as a ReP.0.2.2;
a reference point after PUSCH multi-antenna processing is defined as a ReP.0.2.3; and
a reference point after fast Fourier transform (Fast Fourier Transform, FFT) of the PUSCH is defined as a ReP.0.2.4.

In this embodiment of this application, the target object includes at least one of data, a signal, and a service. For example, the first indication information may be used to indicate processing of the signal after IFFT transform at the reference point ReP.0.0.1, or processing of the signal corresponding to the decoded bit sequence at the reference point ReP.0.0.3.

In this embodiment of this application, the second end receives the first indication information and determines the processing mode of the target object at the reference point by using the first indication information, and then the second end can process the target object based on the processing mode of the target object at the reference point and the first indication information. In this way, the processing mode of the target object at the reference point by the second end can be determined by using the first indication information, so that the communication device has higher flexibility in processing the signal, data, service, or the like. In addition, a corresponding capability exchange procedure can be established between the communication devices, so that the communication devices can effectively coordinate the processing mode of the signal, data, service, or the like.

Optionally, the processing mode includes any one of the following:
a processing mode based on an artificial intelligence (Artificial Intelligence, AI) model;
an undefined (Undefined) processing mode; and
a processing mode determined by a target end, where the target end includes the second end.

Optionally, if the first indication information does not include the processing mode of the target object at the reference point, it may be considered that the processing mode is the undefined (Undefined) processing mode and is to be autonomously determined by the second end.

Alternatively, the target end may be the first end, and the first end may autonomously determine the processing mode and notify the second end by using the first indication information; or the first end may indicate, by using the first indication information, that the second end is to autonomously determine the processing mode.

It should be noted that, in a case that the processing mode is the processing mode based on the AI model, the first indication information may include information such as a type, an input/output, and a weight parameter of the AI model. The processing mode based on the AI model may also be referred to as a processing mode based on a neural network. Optionally, the processing mode may also be another AI or machine learning processing mode, such as a Gaussian process, a Bayesian network, or reinforcement learning.

Optionally, the processing mode based on the AI model is indicated by at least one of the following:
a model connection relationship between AI models;
a startup mode of the AI model; and
information about a processing domain corresponding to the AI model, where the processing domain includes the reference point.

For example, the first indication information may include the connection relationship between the AI models to indicate that the processing mode of the target object at the reference point is the processing mode based on the AI model. In this case, the target object may be processed by using at least two AI models, and the first indication information includes the model connection relationship between the at least two AI models.

Optionally, the model connection relationship between the AI models includes at least one of the following: a processing order of the AI models and an input-output relationship between the AI models.

For example, in a case that the first indication information indicates processing of the target object at the reference point based on at least two AI models, the first indication information may include a processing order of the at least two AI models, for example, starting from an agreed reference point, which AI model is used for processing, and which AI model is used for processing subsequently. It may be understood that, based on the first indication information, the second end can process the target object at the pre-agreed reference point according to the processing order of the AI models indicated by the first indication information.

Alternatively, the first indication information may include the input-output relationship between the AI models. For example, some inputs of one AI model are used as some outputs of one or more other AI models.

Alternatively, the first indication information may include the processing order of the AI models and the input-output relationship between the AI models. Examples are not excessively provided herein.

Optionally, that the second end processes the target object at the reference point based on the processing mode includes at least one of the following:
in a case that the model connection relationship between the AI models includes the processing order of the AI models, the second end determines a first application AI model according to the processing order of the AI models, and starts the first application AI model according to the processing order of the AI models to process the target object; and
in a case that the model connection relationship between the AI models includes the input-output relationship between the AI models, the second end determines a second application AI model based on the input-output relationship between the AI models, and processes the target object by using the second application AI model.

There may be a plurality of first application AI models and a plurality of second application AI models.

Optionally, the first indication information includes first target information, the first target information is used to indicate the model connection relationship between the AI models, and the first target information includes at least one of the following:
a model identifier used to indicate an AI model used by the target end, where the target end includes the second end; and
a model connection identifier used to indicate a connection relationship between different AI models.

For example, in the first indication information, the first target information may be defined as "a model addition list" ("modelAddModList"), where a model identifier (modelID) corresponding to model configuration information (model Configuration) is cited and used to indicate the model identifier of the AI model used by the second end. Alternatively, in the first indication information, the first target information may be defined as "a model topology addition list" ("modelTopologyAddModList"), where a model connection identifier (modTopID) corresponding to model topology configuration information (modelTopologyConfiguration) is cited and used to indicate the connection relationship between different AI models.

For example, the reference point defined above is used. The configured modelAddModList includes the following model IDs: model.0.0.0 to model.0.0.3, model.0.1.0 to model.0.1.4, and model.0.2.0 to model.0.2.3. A processing mode of a model (non-defined, or processing based on an AI model, or another machine learning processing mode) is configured in a model configuration corresponding to each model ID. A structure of the AI model, a corresponding parameter, or the like may also be configured in the model configuration. An input reference point and an output reference point of the model may also be configured in the model configuration. For example, an input reference point of the model.0.0.0 is defined as the ReP.0.0.0, and an output reference point thereof is defined as the ReP.0.0.1. A corresponding connection relationship is established based on the foregoing model definitions and a relationship between the corresponding input reference point and output reference point.

For another example, the modelTopologyAddModList may also be configured to indicate the model connection relationship between the AI models, and a connection relationship for model information processing is configured in the modelTopologyAddModList. For example, a connection relationship corresponding to a topology ID 1 includes: topology.0.0 = sequential (model.0.0.0, model.0.0.1, model.0.0.2, model.0.0.3). In this case, only an input reference point of the model.0.0.0 and an output reference point corresponding to the model.0.0.3 need to be defined, and there is no need to define a connection reference point between the models.

Optionally, the first target information includes model configuration information, and the model configuration information includes the model identifier; and the model configuration information is further used to configure an input of the AI model to cite a first object, and the first object includes at least one of the following: a preset reference point and an output of another AI model.

For example, the model configuration information (modelConfiguration) includes an input information element (input information element, input IE), where the input IE may cite a preset reference point as an input of the AI model, for example, cite a data point Y of a reference point X (referencePonitX.datapointY) as an input of the AI model. If the AI model has a plurality of inputs, other preset reference points such as a data point Z of the reference point X (referencePonitX.datapointZ) may continue to be cited as other inputs of the AI model.

Alternatively, the input IE in the model configuration information may cite an output of another AI model to define an input of an AI model.

It should be noted that, in a case that the model configuration information is used to configure the input of the AI model to cite the preset reference point, a quantity of preset reference points also needs to be considered. Optionally, in a case that there are a plurality of preset reference points, the plurality of preset reference points are arranged in a preset order to form an input of the AI model.

In this embodiment of this application, the first indication information may further include the startup mode of the AI model to indicate that a processing mode of the target object at the pre-agreed reference point is the processing mode based on the AI model.

Optionally, the startup mode of the AI model includes at least one of the following:
startup based on a preset start time;
startup in a case that data of at least one reference point corresponding to the AI model arrives;
startup in a case that data of at least one reference point in the data of the at least one reference point corresponding to the AI model is updated;
startup in a case that all inputs required by the AI model arrive;
startup in a case that at least one preset AI model completes processing;
startup in a case that an output of at least one preset AI model is updated;
startup in a case that the AI model receives an input from a previous AI model; and
startup in a case that the AI model receives a preset output value from another AI model.

It should be noted that the first end may configure, in the first indication information, the startup mode of the AI model, which may also be referred to as a startup condition, an effective condition, or the like, to notify the second end when to start and/or how to start the AI model, to implement processing of the target object.

For example, in a case that a model connection relationship between a plurality of AI models has been determined, the first indication information may be used to configure startup of each AI model based on a preset start time, and then the second end can know, based on the first indication information, the time to wait before starting a corresponding AI model for processing.

Alternatively, the first indication information may be used to configure the startup mode of the AI model as: starting the AI model in a case that the data of the at least one reference point corresponding to the AI model arrives at the corresponding reference point. For example, the AI model corresponds to three reference points. In this case, after inputs of the three reference points all arrive at respective reference points, the AI model is started.

Alternatively, the first indication information may be further used to configure the startup mode of the AI model as: starting the AI model in a case that data of at least one reference point in the data of the at least one reference point corresponding to the AI model is updated. For example, the AI model corresponds to three reference points. If data of one of the reference points is updated, the AI model is started.

Alternatively, the first indication information may be further used to configure startup of the AI model as: starting the AI model in the case that all the inputs required by the AI model arrive.

Alternatively, startup of an AI model may be implemented depending on an input, an output, or processing of a specific AI model. For example, the first indication information may be used to configure startup of an AI model as startup in a case that one or more other preset AI models complete processing, or configure startup of an AI model as startup in a case that an output of one or more other preset AI models is updated, or configure startup of an AI model as startup in a case that one or more other preset AI models complete processing and that an output thereof is updated. That the AI model completes processing may mean that the output of the AI model is obtained.

Alternatively, startup of an AI model may be implemented depending on an input or output value of a specific AI model. For example, for a plurality of AI models, in a case that a model connection relationship between the plurality of AI models is determined, the first indication information may be used to configure startup of an AI model as startup in a case that an input from a previous AI model is received; or the first indication information configures startup of an AI model as startup in a case that a specific output value is received from another AI model.

Certainly, the startup mode of the AI model may also include at least one of the foregoing modes. Examples are not excessively provided herein.

For example, the following illustrates startup modes or startup conditions of several AI models.

Startup of model.0.0.1: Data of the reference point ReP.0.0.0 arrives, or a previous model notifies startup processing, where the previous model may be a model arranged immediately before the model.0.0.1 in the determined model connection relationship, and all previous models in the following description may be understood in this way and are not described again subsequently.

Startup of model.0.0.2: Data of the reference point ReP.0.0.1 arrives, or a previous model notifies startup processing.

Startup of model.0.0.3: Data of the reference point ReP.0.0.2 arrives, or a previous model notifies startup processing.

Startup of model.0.1.1: Startup based on a specific start time in a message of the model.0.1.0 is indicated in a message of the reference point ReP.0.0.4, and data of the reference point ReP.0.1.1 arrives.

Startup of model.0.1.2: Data of the reference point ReP.0.1.2 arrives, or a previous model notifies startup processing.

Startup of model.0.1.3: Data of the reference point ReP.0.1.3 arrives, or a previous model notifies startup processing.

Startup of model.0. 1.4: Data of the reference point ReP.0.1.4 arrives, or a previous model notifies startup processing.

Startup of model.0.2.1: The model.0.2.1 is indicated in a message of the reference point ReP.0.0.4, and is started based on a specific start time in a message of the model.0.1.1; or started based on indication information of the reference point ReP.0.2.0 (for example, indicating the start time, or indicating whether to start), and whether data of the reference point arrives.

Startup of model.0.2.2: Data of the reference point ReP.0.2.2 arrives, or a previous model notifies startup processing.

Startup of model.0.2.3: Data of the reference point ReP.0.2.3 arrives, or a previous model notifies startup processing.

Startup of model.0.2.4: Data of the reference point ReP.0.2.4 arrives, or a previous model notifies startup processing.

In this embodiment of this application, at least one AI model may be started. For example, startup of a plurality of AI models may be triggered in a case that at least one preset AI model completes processing.

In this embodiment of this application, the first indication information may further indicate, by using the information about the processing domain corresponding to the AI model, that the processing mode of the target obj ect at the pre-agreed reference point is the processing mode based on the AI model. The processing domain may be considered as a set of reference points. Assuming that there are a plurality of reference points, processing domains may be defined based on different functions of different reference points, and functions corresponding to reference points in a same processing domain are the same. For example, a channel coding/decoding processing domain and a multi-antenna processing domain may be defined.

Optionally, there is at least one processing domain, and the processing domain is determined by at least one of the following: a function of the reference point, a relationship between an input/output of the AI model and the reference point, and the model connection relationship between the AI models.

For example, the processing domain may be defined based on the function of the reference point, and then the processing domain may be determined based on the function of the reference point. Alternatively, the relationship between the input/output of the AI model and the reference point is configured. Because the reference point belongs to the processing domain, the processing domain can be determined, and a relationship between the AI model and the processing domain can be determined. Alternatively, a corresponding processing domain may be determined based on a model connection relationship between a plurality of AI models. For example, an AI model located between two AI models is in the same processing domain as the two AI models.

Optionally, the information about the processing domain includes at least one of the following: a processing time constraint corresponding to the processing domain; and a processing mode corresponding to the processing domain. The processing time constraint may refer to processing duration, a start time, or the like of the AI model in the corresponding processing domain; and the processing mode may refer to the startup mode, the processing duration, or the like of the AI model in the corresponding processing domain.

Optionally, the processing mode corresponding to the processing domain includes at least one of the following: the startup mode of the AI model, the start time of the AI model, an end time of the AI model, and the processing duration of the AI model.

Optionally, the processing time constraint corresponding to the processing domain includes at least one of the following: the startup mode of the AI model, the start time of the AI model, the end time of the AI model, and the processing duration of the AI model.

It should be noted that content included in the processing time constraint corresponding to the processing domain may be different from content included in the processing mode corresponding to the processing domain. For example, the processing time constraint corresponding to the processing domain includes the start time of the AI model and the end time of the AI model, and the processing mode corresponding to the processing domain includes the startup mode of the AI model.

Optionally, different processing domains correspond to respective processing time constraints; and different processing domains correspond to respective processing modes.

In this embodiment of this application, the first indication information is further used to indicate at least one of a test mode and a test requirement for the reference point, and then the second end can test the reference point based on the test mode and the test requirement for the reference point that are carried in the first indication information, for example, test processing stability and processing performance of the target object at the reference point.

Optionally, the method further includes:
the second end tests the reference point based on at least one of the test mode and the test requirement.

It may be understood that the second end can test the reference point based on the test mode and/or the test requirement, for example, test the processing stability and processing performance of the target object at the reference point. In addition, for the processing mode based on the AI model, the second end can further establish a corresponding test mode and/or test requirement. The second end can also test the processing mode based on the AI model, for example, test processing stability and processing performance of the AI model.

In this embodiment of this application, the method further includes:
the second end sends, to the fourth end, a first service request for requesting a first function;
the second end receives description information that is of the first function and that is sent by the fourth end; and
the second end processes the target object based on the description information of the first function, where
the description information of the first function includes at least one of the following: the reference point corresponding to the first end, the processing mode, a relationship between the reference point and the processing mode, information about a processing domain, AI model information, a model connection relationship between AI models, and a startup mode of an AI model.

It should be noted that the first end may send, to the fourth end, a first request for requesting to register a first function, where description information of the first function includes at least one of the following: the reference point corresponding to the first end, the processing mode, a relationship between the reference point and the processing mode, information about a processing domain, AI model information, a model connection relationship between AI models, and a startup mode of an AI model.

The fourth end may be a network repository function (Network Repository Function, NRF). The NRF is responsible for maintaining descriptions of available network function instances, services supported by each network function instance, and services on which each network function depends. Optionally, the fourth end may alternatively be any other communication device. This is not specifically limited in this embodiment of this application.

In this embodiment of this application, the first end sends the first request to the fourth end, to request to register the first function at the fourth end. The first request may carry the description information of the first function, where the description information is used to describe the first function. For example, the description information of the first function may include AI model information, for example, an AI model or an AI model list, such as the model.0.0.0, or an AI model list [model.0.0.0, model.0.0.1, model.0.0.3], and then based on the AI model information, which AI model is used to process the first function can be determined.

For another example, the description information of the first function includes the reference point corresponding to the first end, and then at which reference points the target object is processed is determined. Alternatively, the description information of the first function includes the processing mode. For example, the processing mode includes the processing mode based on the AI model, the undefined processing mode, or a processing mode autonomously determined by the target end. Alternatively, the description information of the first function includes the relationship between the reference point and the processing mode. For example, a processing mode 1 is applied to the reference point ReP.0.0.0, and a processing mode 2 is applied to the reference point ReP.0.0.1.

It should be noted that the description information of the first function may further include the information about the processing domain. As mentioned above, the processing domain includes reference points, and then based on the processing domain, at which reference points the target object is processed can be determined. In addition, based on the processing domain, the function of the reference point, a relationship between an input/output of the AI model and the reference point, the model connection relationship between the AI models, or the like can be determined. The information about the processing domain includes a processing time constraint corresponding to the processing domain and/or a processing mode corresponding to the processing domain. For detailed information about the processing domain, refer to the description in the foregoing embodiment. Details are not described herein again.

In addition, the description information of the first function may further include the AI model information, the model connection relationship between the AI models, and the startup mode of the AI model. For specific concepts about the AI model information, the model connection relationship between the AI models, and the startup mode of the AI model, refer to the description in the foregoing embodiment. Details are not described herein again.

It should be noted that the description information of the first function includes at least one of the reference point corresponding to the first function, the processing mode, the relationship between the reference point and the processing mode, the information about the processing domain, the AI model information, the model connection relationship between the AI models, and the startup mode of the AI model. For information content specifically included in the description information of the first function, there may be a plurality of manners, which are not exhaustively listed in this embodiment of this application.

In this embodiment of this application, the second end sends, to the fourth end, the first service request for requesting the first function, the fourth end can send the description information corresponding to the registered first function to the second end, and then the second end processes the target object based on the description information of the first function. The target object may be the same as or different from the target object in the foregoing embodiment. For example, the first indication information indicates a processing mode of a signal at the reference point. Herein, the second end processes a service based on the description information of the first function.

It should be noted that the fourth end may register the first function based on the first request sent by the first end, and then the second end or a communication device other than the first end can send a first service request to the fourth end to request the first function. In this case, the first end processes the target object based on the description information of the first function. For the description information of the first function, refer to the foregoing description. Details are not described herein again.

In addition, it should be noted that, in a case that the second end sends the first service request to the fourth end and requests the first function, the first end can further exchange third indication information with a sixth end associated with the first end, and then the sixth end can also process the target object based on the description information of the first function. The sixth end may be a communication device other than the first end and the fourth end.

Optionally, that the second end processes the target object based on the description information of the first function includes at least one of the following:
in a case that the description information of the first function includes the reference point corresponding to the first end, the second end processes the target object at the reference point;
in a case that the description information of the first function includes the relationship between the reference point and the processing mode, the second end processes the target object at the reference point based on the corresponding processing mode;
in a case that the description information of the first function includes the information about the processing domain, the second end obtains a target reference point included in the processing domain, and processes the target object at the target reference point;
in a case that the description information of the first function includes the processing mode, the second end processes the target object based on the processing mode;
in a case that the description information of the first function includes the AI model information, the second end determines a target AI model based on the AI model information, and processes the target object based on the target AI model;
in a case that the description information of the first function includes the model connection relationship between the AI models, the second end determines the target AI model based on the connection relationship between the AI models, and processes the target object based on the target AI model; and
in a case that the description information of the first function includes the startup mode of the AI model, the second end determines the target AI model based on the startup mode of the AI model, and starts the target AI model based on the startup mode of the AI model to process the target object.

Further, in a case that the description information of the first function is updated, the method may further include:
the second end receives updated description information that is of the first function and that is sent by at least one of the first end and the fourth end.

For example, the description information of the first function includes the startup mode of the AI model. If the startup mode of the AI model is updated, the first end sends an updated startup mode of the AI model to the fourth end and/or the second end. For another example, the description information of the first function includes the reference point corresponding to the first end. In a case that the reference point corresponding to the first end is updated, the first end sends an updated reference point to the fourth end and/or the second end. It may be understood that information content included in the description information of the first function may also be other cases. Examples are not excessively provided herein.

Optionally, the fourth end can send the received updated description information of the first function to the second end, and then the second end can directly receive the updated description information that is of the first function and that is sent by the first end, or receive the updated description information that is of the first function and that is sent by the fourth end.

In this embodiment of this application,
the first end sends, to the fifth end, a second request for requesting to register a first mode.

In this case, the method may further include:
the second end sends, to the fifth end, a second service request for requesting the first mode;
the second end receives description information that is of the first mode and that is sent by the fifth end; and
the second end processes the target object based on the description information of the first mode, where
the description information of the first mode includes at least one of the following: the reference point corresponding to the first mode, the processing mode, a relationship between the reference point and the processing mode, information about a processing domain, AI model information, a model connection relationship between AI models, and a startup mode of an AI model.

It should be noted that the fifth end may also be a network repository function (Network Repository Function, NRF). Optionally, the fifth end and the fourth end may be a same communication device, or may be different communication devices.

In this embodiment of this application, the first end sends the second request to the fifth end, to request to register the first mode at the fifth end. The second request may carry the description information of the first mode, where the description information is used to describe the first mode. The description information of the first mode includes at least one of the reference point corresponding to the first mode, the processing mode, the relationship between the reference point and the processing mode, the information about the processing domain, the AI model information, the model connection relationship between the AI models, and the startup mode of the AI model. For specific content included in the description information of the first mode, there are a plurality of possible cases, which are not specifically listed in this embodiment of this application.

For specific concepts about the reference point, the processing mode, the relationship between the reference point and the processing mode, the information about the processing domain, the AI model information, the model connection relationship between the AI models, and the startup mode of the AI model, refer to the description in the foregoing embodiment. Details are not described herein again.

Optionally, that the second end processes the target object based on the description information of the first mode includes:
in a case that the description information of the first mode includes the reference point corresponding to the first mode, the second end processes the target object at the reference point;
in a case that the description information of the first mode includes the relationship between the reference point and the processing mode, the second end processes the target object at the reference point based on the corresponding processing mode;
in a case that the description information of the first mode includes the information about the processing domain, the second end obtains a target reference point included in the processing domain, and processes the target object at the target reference point;
in a case that the description information of the first mode includes the processing mode, the second end processes the target object based on the processing mode;
in a case that the description information of the first mode includes the AI model information, the second end determines a target AI model based on the AI model information, and processes the target object based on the target AI model;
in a case that the description information of the first mode includes the model connection relationship between the AI models, the second end determines the target AI model based on the connection relationship between the AI models, and processes the target object based on the target AI model; and
in a case that the description information of the first function includes the startup mode of the AI model, the second end determines the target AI model based on the startup mode of the AI model, and starts the target AI model based on the startup mode of the AI model to process the target object.

Optionally, in a case that the second end requests the first mode from the fifth end, the first end processes a third target object based on a target mode, where the target mode is to process a fourth target object based on description information of the first mode.

Optionally, that the first end processes a fourth target object based on description information of the first mode includes:
in a case that the description information of the first mode includes the reference point corresponding to the first mode, the first end processes the fourth target object at the reference point;
in a case that the description information of the first mode includes the relationship between the reference point and the processing mode, the first end processes the fourth target object at the reference point based on the corresponding processing mode;
in a case that the description information of the first mode includes the information about the processing domain, the first end obtains a target reference point included in the processing domain, and processes the fourth target object at the target reference point;
in a case that the description information of the first mode includes the processing mode, the first end processes the fourth target object based on the processing mode;
in a case that the description information of the first mode includes the AI model information, the first end determines a target AI model based on the AI model information, and processes the fourth target object based on the target AI model;
in a case that the description information of the first mode includes the model connection relationship between the AI models, the first end determines the target AI model based on the connection relationship between the AI models, and processes the fourth target object based on the target AI model; and
in a case that the description information of the first function includes the startup mode of the AI model, the first end determines the target AI model based on the startup mode of the AI model, and starts the target AI model based on the startup mode of the AI model to process the fourth target object.

Optionally, in a case that the description information of the first mode is updated, the method further includes:
the second end receives updated description information that is of the first mode and that is sent by at least one of the first end and the fifth end.

For example, the description information of the first mode includes the startup mode of the AI model. If the startup mode of the AI model is updated, the first end sends an updated startup mode of the AI model to the fifth end and/or the second end. For another example, the description information of the first mode includes the reference point corresponding to the first mode. In a case that the reference point corresponding to the first mode is updated, the first end sends an updated reference point to the fifth end and/or the second end. It may be understood that information content included in the description information of the first mode may also be other cases. Examples are not excessively provided herein.

Optionally, the fifth end can send the received updated description information of the first mode to the second end, and then the second end can directly receive the updated description information that is of the first mode and that is sent by the first end, or receive the updated description information that is of the first mode and that is sent by the fifth end.

For better understanding, the foregoing solutions of the embodiments of this application are hereinafter described by using specific embodiments.

It is assumed that description information of network function A (that is, the foregoing first function) includes at least one of the following:
(1) an AI model or an AI model list included in network function A, for example, the model.0.0.0 or [model.0.0.0, model.0.0.1, model.0.0.3];
(2) service information generated by network function A, such as a packet data convergence protocol (Packet Data Convergence Protocol, PDCP) service data unit (Service Data Unit, SDU), a radio link control (Radio Link Control, RLC) SDU, a media access control (Media Access Control, MAC) SDU, or a transport block (Transport Block, TB), which may optionally further include a mapping relationship between a service and a reference point, where for example, service 1 may be used for the reference point ReP.0.0.0, and service 2 may be used for reference points ReP.0.0.0 and ReP.0.0.1;
(3) service information that network function A depends on or consumes, that is, a startup relationship or an effective condition, such as time sequence information or time information, event information, a MAC SDU, or TB block data; and
(4) a processing domain to which network function A belongs.

Similarly, description information of network function B, description information of network function C, or the like may be included. Examples are not provided herein. The following briefly describes a related interaction process.

Network function A, B, or C first registers with a network repository function (Network Repository Function, NRF) responsible for network function registration. This network repository function is responsible for maintaining description information of available network function instances, services supported by each network function instance, and services on which each network function depends.

If the description information of network function A, B, or C is updated by configuration or by itself, the description information thereof needs to be updated to the network repository function.

If network function A needs to use a first service, network function A may send a network function/service discovery request to the network repository function, where the request includes service description information required by network function A and a performance requirement of network function A.

Based on network functions that can be discovered by the network repository function, the network repository function provides network function information that satisfies a requested function/service.

Based on the received information, network function A uses the service generated by the network function.

If network function A needs to continue to use the service, network function A may subscribe to network function configuration (profile) update information of the service provided by the network repository function. If no update information is received, the network function may subsequently directly use the service generated by this function. If update information is received and the update information has impact on the service used by network function A, network function A may resend its required function/service discovery request to the network repository function.

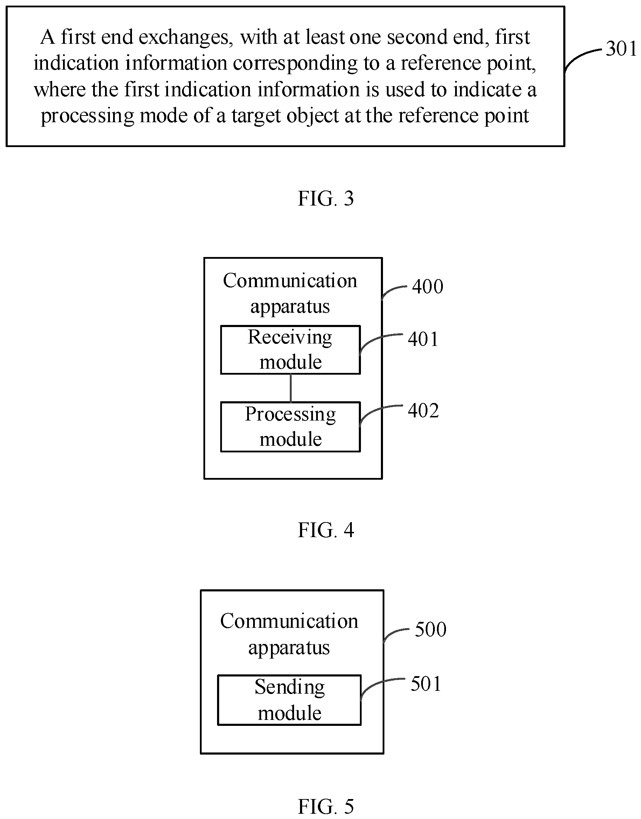

FIG. 3 is a flowchart of another communication method according to an embodiment of this application. As shown in FIG. 3, the communication method includes the following step.

Step 301: A first end exchanges, with at least one second end, first indication information corresponding to a reference point, where the first indication information is used to indicate a processing mode of a target object at the reference point.

Optionally, the reference point is determined based on at least one of the following:
a predefinition;
a protocol agreement; and
second indication information sent by a third end, where the second indication information is used to indicate the reference point.

Optionally, the processing mode includes either of the following:
a processing mode based on an AI model; and
a processing mode determined by a target end, where the target end is the first end or the second end.

Optionally, the processing mode based on the AI model is indicated by at least one of the following:
a model connection relationship between AI models;
a startup mode of the AI model; and
information about a processing domain corresponding to the AI model, where the processing domain includes the reference point.

Optionally, the model connection relationship between the AI models includes at least one of the following:
a processing order of the AI models; and
an input-output relationship between the AI models.

Optionally, the first indication information includes first target information, the first target information is used to indicate the model connection relationship between the AI models, and the first target information includes at least one of the following:
a model identifier used to indicate an AI model used by the target end, where the target end includes at least one of the first end and the second end; and
a model connection identifier used to indicate a connection relationship between different AI models.

Optionally, the first target information includes model configuration information, and the model configuration information includes the model identifier; and
the model configuration information is further used to configure an input of the AI model to cite a first object, and the first object includes at least one of the following: a preset reference point and an output of another AI model.

Optionally, in a case that there are a plurality of preset reference points, the plurality of preset reference points are arranged in a preset order.

Optionally, the startup mode of the AI model includes at least one of the following:
startup based on a preset start time;
startup in a case that data of at least one reference point corresponding to the AI model arrives;
startup in a case that data of at least one reference point in the data of the at least one reference point corresponding to the AI model is updated;
startup in a case that all inputs required by the AI model arrive;
startup in a case that at least one preset AI model completes processing;
startup in a case that an output of at least one preset AI model is updated;
startup in a case that the AI model receives an input from a previous AI model; and
startup in a case that the AI model receives a preset output value from another AI model.

Optionally, at least one AI model is started.

Optionally, there is at least one processing domain, and the processing domain is determined by at least one of the following:
a function of the reference point;
a relationship between an input/output of the AI model and the reference point; and
the model connection relationship between the AI models.

Optionally, the information about the processing domain includes at least one of the following:
a processing time constraint corresponding to the processing domain; and
a processing mode corresponding to the processing domain.

Optionally, the processing mode corresponding to the processing domain includes at least one of the following: the startup mode of the AI model, a start time of the AI model, an end time of the AI model, and processing duration of the AI model.

Optionally, the processing time constraint corresponding to the processing domain includes at least one of the following: the startup mode of the AI model, the start time of the AI model, the end time of the AI model, and the processing duration of the AI model.

Optionally, different processing domains correspond to respective processing time constraints.

Optionally, different processing domains correspond to respective processing modes.

Optionally, the method further includes:
the first end sends, to a fourth end, a first request for requesting to register a first function, where
description information of the first function includes at least one of the following: the reference point corresponding to the first function, the processing mode, a relationship between the reference point and the processing mode, information about a processing domain, AI model information, a model connection relationship between AI models, and a startup mode of an AI model.

Optionally, the method further includes:
in a case that the second end requests a first function from a fourth end, the first end processes a first target object based on description information of the first function, or the first end exchanges third indication information with a sixth end, where the third indication information is used to instruct the sixth end to process a second target object based on the description information of the first function, and the sixth end is an entity having an association relationship with the first end, where
the description information of the first function includes at least one of the following: the reference point corresponding to the first function, the processing mode, a relationship between the reference point and the processing mode, information about a processing domain, AI model information, a model connection relationship between AI models, and a startup mode of an AI model.

Optionally, that the first end processes a first target object based on description information of the first function includes at least one of the following:
in a case that the description information of the first function includes the reference point corresponding to the first end, the first end processes the third target object at the reference point;
in a case that the description information of the first function includes the relationship between the reference point and the processing mode, the first end processes the target object at the reference point based on the corresponding processing mode;
in a case that the description information of the first function includes the processing domain, the first end obtains a reference point included in the processing domain, and processes the target object at the reference point;
in a case that the description information of the first function includes the processing mode, the first end processes the target object based on the processing mode;
in a case that the description information of the first function includes the AI model information, the first end determines a target AI model based on the AI model information, and processes the target object based on the target AI model;
in a case that the description information of the first function includes the model connection relationship between the AI models, the first end determines the target AI model based on the connection relationship between the AI models, and processes the target object based on the target AI model; and
in a case that the description information of the first function includes the startup mode of the AI model, the first end determines the target AI model based on the startup mode of the AI model, and starts the target AI model based on the startup mode of the AI model to process the target object.

Optionally, the method further includes:
in a case that the description information of the first function is updated, the first end sends updated description information of the first function to at least one of the fourth end and the second end.

Optionally, the method further includes:
the first end sends, to a fifth end, a second request for requesting to register a first mode, where
description information of the first mode includes at least one of the following: the reference point corresponding to the first mode, the processing mode, a relationship between the reference point and the processing mode, information about a processing domain, AI model information, a model connection relationship between AI models, and a startup mode of an AI model.

Optionally, the method further includes:
in a case that the second end requests a first mode from a fifth end, the first end processes a third target object based on a target mode, where the target mode is to process a fourth target object based on description information of the first mode, where
the description information of the first mode includes at least one of the following: the reference point corresponding to the first mode, the processing mode, a relationship between the reference point and the processing mode, information about a processing domain, AI model information, a model connection relationship between AI models, and a startup mode of an AI model.

Optionally, the method further includes:
in a case that the description information of the first mode is updated, the first end sends updated description information of the first mode to at least one of the fifth end and the second end.

Optionally, the first indication information is further used to indicate at least one of a test mode and a test requirement for the reference point.

Optionally, the method further includes:
the first end tests the reference point based on at least one of the test mode and the test requirement.

It should be noted that the communication method provided in this embodiment of this application is applied to the first end, and corresponds to the communication method applied to the second end according to the embodiment in FIG. 2. For related concepts and specific implementation processes of the related steps in this embodiment of this application, refer to the description in the method embodiment in FIG. 2. To avoid repetition, details are not described herein again.

In this embodiment of this application, the first end can exchange, with the second end, the processing mode of the target object at the reference point, so that a communication device has higher flexibility in processing a signal, data, a service, or the like. In addition, a corresponding capability exchange procedure can be established between communication devices, so that the communication devices can effectively coordinate the processing mode of the signal, data, service, or the like.

The communication method provided in this embodiment of this application may be performed by a communication apparatus. A communication apparatus provided in an embodiment of this application is described by assuming that the communication apparatus performs the communication method in this embodiment of this application.

FIG. 4 is a structural diagram of a communication apparatus according to an embodiment of this application. As shown in FIG. 4, the communication apparatus 400 includes:
a receiving module 401, configured to receive first indication information, where the first indication information is used to indicate a processing mode of a target object at a reference point; and
a processing module 402, configured to process the target object at the reference point based on the processing mode.

Optionally, the reference point is determined based on at least one of the following:
a predefinition;
a protocol agreement; and
second indication information sent by a third end, where the second indication information is used to indicate the reference point.

Optionally, the processing mode includes either of the following:
a processing mode based on an artificial intelligence AI model; and
a processing mode determined by a target end, where the target end includes the second end.

Optionally, the processing mode based on the AI model is indicated by at least one of the following:
a model connection relationship between AI models;
a startup mode of the AI model; and
information about a processing domain corresponding to the AI model, where the processing domain includes the reference point.

Optionally, the model connection relationship between the AI models includes at least one of the following:
a processing order of the AI models; and
an input-output relationship between the AI models.

Optionally, the processing module 402 is further configured to perform at least one of the following:
in a case that the model connection relationship between the AI models includes the processing order of the AI models, determining a first application AI model according to the processing order of the AI models, and starting the first application AI model according to the processing order of the AI models to process the target object; and
in a case that the model connection relationship between the AI models includes the input-output relationship between the AI models, determining a second application AI model based on the input-output relationship between the AI models, and processing the target object by using the second application AI model.

Optionally, the first indication information includes first target information, the first target information is used to indicate the model connection relationship between the AI models, and the first target information includes at least one of the following:
a model identifier used to indicate an AI model used by the target end, where the target end includes the second end; and
a model connection identifier used to indicate a connection relationship between different AI models.

Optionally, the first target information includes model configuration information, and the model configuration information includes the model identifier; and
the model configuration information is further used to configure an input of the AI model to cite a first object, and the first object includes at least one of the following: a preset reference point and an output of another AI model.

Optionally, in a case that there are a plurality of preset reference points, the plurality of preset reference points are arranged in a preset order.

Optionally, the startup mode of the AI model includes at least one of the following:
startup based on a preset start time;
startup in a case that data of at least one reference point corresponding to the AI model arrives;
startup in a case that data of at least one reference point in the data of the at least one reference point corresponding to the AI model is updated;
startup in a case that all inputs required by the AI model arrive;
startup in a case that at least one preset AI model completes processing;
startup in a case that an output of at least one preset AI model is updated;
startup in a case that the AI model receives an input from a previous AI model; and
startup in a case that the AI model receives a preset output value from another AI model.

Optionally, at least one AI model is started.

Optionally, there is at least one processing domain, and the processing domain is determined by at least one of the following:
a function of the reference point;
a relationship between an input/output of the AI model and the reference point; and
the model connection relationship between the AI models.

Optionally, the information about the processing domain includes at least one of the following:
a processing time constraint corresponding to the processing domain; and
a processing mode corresponding to the processing domain.

Optionally, the processing mode corresponding to the processing domain includes at least one of the following: the startup mode of the AI model, a start time of the AI model, an end time of the AI model, and processing duration of the AI model.

Optionally, the processing time constraint corresponding to the processing domain includes at least one of the following: the startup mode of the AI model, the start time of the AI model, the end time of the AI model, and the processing duration of the AI model.

Optionally, different processing domains correspond to respective processing time constraints.

Optionally, different processing domains correspond to respective processing modes.

Optionally, the apparatus further includes a sending module, where
the sending module is configured to send, to a fourth end, a first service request for requesting a first function;
the receiving module 401 is further configured to receive description information that is of the first function and that is sent by the fourth end; and
the processing module 402 is further configured to process the target object based on the description information of the first function, where
the description information of the first function includes at least one of the following: the reference point corresponding to a first end, the processing mode, a relationship between the reference point and the processing mode, information about a processing domain, AI model information, a model connection relationship between AI models, and a startup mode of an AI model.

Optionally, the processing module 402 is further configured to perform at least one of the following:
in a case that the description information of the first function includes the reference point corresponding to the first end, processing the target object at the reference point;
in a case that the description information of the first function includes the relationship between the reference point and the processing mode, processing the target object at the reference point based on the corresponding processing mode;
in a case that the description information of the first function includes the information about the processing domain, obtaining a target reference point included in the processing domain, and processing the target object at the target reference point;
in a case that the description information of the first function includes the processing mode, processing the target object based on the processing mode;
in a case that the description information of the first function includes the AI model information, determining a target AI model based on the AI model information, and processing the target object based on the target AI model;
in a case that the description information of the first function includes the model connection relationship between the AI models, determining the target AI model based on the connection relationship between the AI models, and processing the target object based on the target AI model; and
in a case that the description information of the first function includes the startup mode of the AI model, determining the target AI model based on the startup mode of the AI model, and starting the target AI model based on the startup mode of the AI model to process the target object.

Optionally, the receiving module 401 is further configured to:
receive updated description information that is of the first function and that is sent by at least one of the first end and the fourth end.

Optionally, the sending module is further configured to send, to a fifth end, a second service request for requesting a first mode;
the receiving module 401 is further configured to receive description information that is of the first mode and that is sent by the fifth end; and
the processing module 402 is further configured to process the target object based on the description information of the first mode, where
the description information of the first mode includes at least one of the following: the reference point corresponding to the first mode, the processing mode, a relationship between the reference point and the processing mode, information about a processing domain, AI model information, a model connection relationship between AI models, and a startup mode of an AI model.

Optionally, the receiving module 401 is further configured to:
receive updated description information that is of the first mode and that is sent by at least one of a first end and the fifth end.

Optionally, the first indication information is further used to indicate at least one of a test mode and a test requirement for the reference point.

Optionally, the apparatus further includes a testing module, where the testing module is configured to:
test the reference point based on at least one of the test mode and the test requirement.

In the solution provided in this embodiment of this application, the apparatus can process the target object based on the processing mode of the target object at the reference point and the first indication information, so that a communication device has higher flexibility in processing a signal, data, a service, or the like. In addition, a corresponding capability exchange procedure can be established between communication devices, so that the communication devices can effectively coordinate the processing mode of the signal, data, service, or the like.

The communication apparatus 400 in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The communication apparatus 400 provided in this embodiment of this application can implement each process implemented by the method embodiment in FIG. 2, with the same technical effect achieved. To avoid repetition, details are not described herein again.

FIG. 5 is a structural diagram of a communication apparatus according to an embodiment of this application. As shown in FIG. 5, the communication apparatus 500 includes:
a sending module 501, configured to exchange, with at least one second end, first indication information corresponding to a reference point, where the first indication information is used to indicate a processing mode of a target object at the reference point.

Optionally, the reference point is determined based on at least one of the following:
a predefinition;
a protocol agreement; and
second indication information sent by a third end, where the second indication information is used to indicate the reference point.

Optionally, the processing mode includes either of the following:
a processing mode based on an artificial intelligence AI model; and
a processing mode determined by a target end, where the target end is the first end or the second end.

Optionally, the processing mode based on the AI model is indicated by at least one of the following:
a model connection relationship between AI models;
a startup mode of the AI model; and
information about a processing domain corresponding to the AI model, where the processing domain includes the reference point.

Optionally, the model connection relationship between the AI models includes at least one of the following:
a processing order of the AI models; and
an input-output relationship between the AI models.

Optionally, the first indication information includes first target information, the first target information is used to indicate the model connection relationship between the AI models, and the first target information includes at least one of the following:
a model identifier used to indicate an AI model used by the second end; and
a model connection identifier used to indicate a connection relationship between different AI models.

Optionally, the first target information includes model configuration information, and the model configuration information includes the model identifier; and
the model configuration information is further used to configure an input of the AI model to cite a first object, and the first object includes at least one of the following: a preset reference point and an output of another AI model.

Optionally, in a case that there are a plurality of preset reference points, the plurality of preset reference points are arranged in a preset order.

Optionally, the startup mode of the AI model includes at least one of the following:
startup based on a preset start time;
startup in a case that data of at least one reference point corresponding to the AI model arrives;
startup in a case that data of at least one reference point in the data of the at least one reference point corresponding to the AI model is updated;
startup in a case that all inputs required by the AI model arrive;
startup in a case that at least one preset AI model completes processing;
startup in a case that an output of at least one preset AI model is updated;
startup in a case that the AI model receives an input from a previous AI model; and
startup in a case that the AI model receives a preset output value from another AI model.

Optionally, at least one AI model is started.

Optionally, there is at least one processing domain, and the processing domain is determined by at least one of the following:
a function of the reference point;
a relationship between an input/output of the AI model and the reference point; and
the model connection relationship between the AI models.

Optionally, the information about the processing domain includes at least one of the following:
a processing time constraint corresponding to the processing domain; and
a processing mode corresponding to the processing domain.

Optionally, the processing mode corresponding to the processing domain includes at least one of the following: the startup mode of the AI model, a start time of the AI model, an end time of the AI model, and processing duration of the AI model.

Optionally, the processing time constraint corresponding to the processing domain includes at least one of the following: the startup mode of the AI model, the start time of the AI model, the end time of the AI model, and the processing duration of the AI model.

Optionally, different processing domains correspond to respective processing time constraints.

Optionally, different processing domains correspond to respective processing modes.

Optionally, the sending module 501 is further configured to:
send, to a fourth end, a first request for requesting to register a first function, where
description information of the first function includes at least one of the following: the reference point corresponding to the first end, the processing mode, a relationship between the reference point and the processing mode, information about a processing domain, AI model information, a model connection relationship between AI models, and a startup mode of an AI model.

Optionally, the apparatus further includes a processing module, where the processing module is configured to:
in a case that the second end requests a first function from a fourth end, process a first target object based on description information of the first function, or exchange third indication information with a sixth end, where the third indication information is used to instruct the sixth end to process a second target object based on the description information of the first function, and the sixth end is an entity having an association relationship with the first end, where
the description information of the first function includes at least one of the following: the reference point corresponding to the first function, the processing mode, a relationship between the reference point and the processing mode, information about a processing domain, AI model information, a model connection relationship between AI models, and a startup mode of an AI model.

Optionally, the processing module is configured to perform at least one of the following:
in a case that the description information of the first function includes the reference point corresponding to the first end, processing the first target object at the reference point;
in a case that the description information of the first function includes the relationship between the reference point and the processing mode, processing the first target object at the reference point based on the corresponding processing mode;
in a case that the description information of the first function includes the processing domain, obtaining a target reference point included in the processing domain, and processing the first target object at the target reference point;
in a case that the description information of the first function includes the processing mode, processing the first target object based on the processing mode;
in a case that the description information of the first function includes the AI model information, determining a target AI model based on the AI model information, and processing the first target object based on the target AI model;
in a case that the description information of the first function includes the model connection relationship between the AI models, determining the target AI model based on the connection relationship between the AI models, and processing the first target object based on the target AI model; and
in a case that the description information of the first function includes the startup mode of the AI model, determining the target AI model based on the startup mode of the AI model, and starting the target AI model based on the startup mode of the AI model to process the first target object.

Optionally, the sending module 501 is further configured to:
in a case that the description information of the first function is updated, send updated description information of the first function to at least one of the fourth end and the second end.

Optionally, the sending module 501 is further configured to:
send, to a fifth end, a second request for requesting to register a first mode, where
description information of the first mode includes at least one of the following: the reference point corresponding to the first mode, the processing mode, a relationship between the reference point and the processing mode, information about a processing domain, AI model information, a model connection relationship between AI models, and a startup mode of an AI model.

Optionally, the processing module is further configured to:
in a case that the second end requests a first mode from a fifth end, process a third target object based on a target mode, where the target mode is to process a fourth target object based on description information of the first mode, where
the description information of the first mode includes at least one of the following: the reference point corresponding to the first mode, the processing mode, a relationship between the reference point and the processing mode, information about a processing domain, AI model information, a model connection relationship between AI models, and a startup mode of an AI model.

Optionally, the sending module 501 is further configured to:
in a case that the description information of the first mode is updated, send updated description information of the first mode to at least one of the fifth end and the second end.

Optionally, the first indication information is further used to indicate at least one of a test mode and a test requirement for the reference point.

Optionally, the apparatus further includes a testing module, where the testing module is configured to:
test, by the first end, the reference point based on at least one of the test mode and the test requirement.

In the solution provided in this embodiment of this application, the apparatus can indicate the processing mode of the target object at the reference point to the second end, so that a communication device has higher flexibility in processing a signal, data, a service, or the like. In addition, a corresponding capability exchange procedure can be established between communication devices, so that the communication devices can effectively coordinate the processing mode of the signal, data, service, or the like.

The communication apparatus 500 provided in this embodiment of this application can implement each process implemented by the method embodiment in FIG. 3, with the same technical effect achieved. To avoid repetition, details are not described herein again.

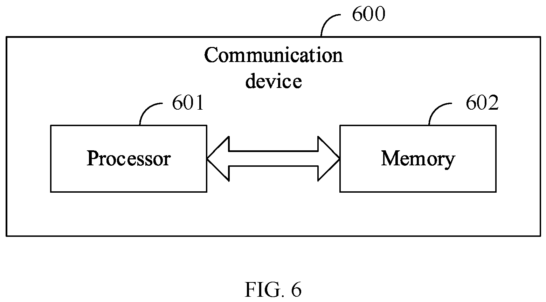

Optionally, as shown in FIG. 6, an embodiment of this application further provides a communication device 600, including a processor 601 and a memory 602. The memory 602 stores a program or instructions capable of running on the processor 601. When the program or instructions are executed by the processor 601, each step of the foregoing communication method embodiment in FIG. 2 or FIG. 3 is implemented, with the same technical effect achieved. To avoid repetition, details are not described herein again.

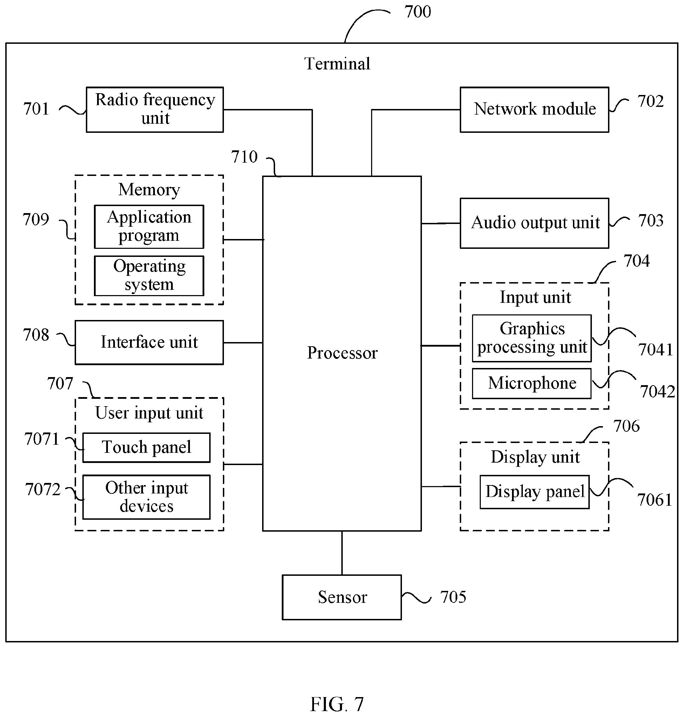

An embodiment of this application further provides a terminal. Each implementation process and implementation of the foregoing method embodiment in FIG. 2 or FIG. 3 can be applied to the terminal embodiment, with the same technical effect achieved. Specifically, FIG. 7 is a schematic diagram of a hardware structure of a terminal for implementing an embodiment of this application.

The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 7 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 710.

In an implementation of this embodiment of this application, the terminal 700 is a first end.

The radio frequency unit 701 is configured to exchange, with at least one second end, first indication information corresponding to a reference point, where the first indication information is used to indicate a processing mode of a target object at the reference point.

Optionally, the reference point is determined based on at least one of the following:
a predefinition;
a protocol agreement; and
second indication information sent by a third end, where the second indication information is used to indicate the reference point.

Optionally, the processing mode includes either of the following:
a processing mode based on an artificial intelligence AI model; and
a processing mode determined by a target end, where the target end includes the second end.

Optionally, the processing mode based on the AI model is indicated by at least one of the following:
a model connection relationship between AI models;
a startup mode of the AI model; and
information about a processing domain, where the processing domain includes the reference point.

Optionally, the model connection relationship between the AI models includes at least one of the following:
a processing order of the AI models; and
an input-output relationship between the AI models.

Optionally, the first indication information includes first target information, the first target information is used to indicate the model connection relationship between the AI models, and the first target information includes at least one of the following:
a model identifier used to indicate an AI model used by the target end, where the target end includes the second end; and
a model connection identifier used to indicate a connection relationship between different AI models.

Optionally, the first target information includes model configuration information, and the model configuration information includes the model identifier; and
the model configuration information is further used to configure an input of the AI model to cite a first object, and the first object includes at least one of the following: a preset reference point and an output of another AI model.

Optionally, in a case that there are a plurality of preset reference points, the plurality of preset reference points are arranged in a preset order.

Optionally, the startup mode of the AI model includes at least one of the following:
startup based on a preset start time;
startup in a case that data of at least one reference point corresponding to the AI model arrives;
startup in a case that data of at least one reference point in the data of the at least one reference point corresponding to the AI model is updated;
startup in a case that all inputs required by the AI model arrive;
startup in a case that at least one preset AI model completes processing;
startup in a case that an output of at least one preset AI model is updated;
startup in a case that the AI model receives an input from a previous AI model; and
startup in a case that the AI model receives a preset output value from another AI model.

Optionally, at least one AI model is started.

Optionally, there is at least one processing domain, and the processing domain is determined by at least one of the following:
a function of the reference point;
a relationship between an input/output of the AI model and the reference point; and
the model connection relationship between the AI models.

Optionally, the information about the processing domain includes at least one of the following:
a processing time constraint corresponding to the processing domain; and
a processing mode corresponding to the processing domain.

Optionally, the processing mode corresponding to the processing domain includes at least one of the following: the startup mode of the AI model, a start time of the AI model, an end time of the AI model, and processing duration of the AI model.

Optionally, the processing time constraint corresponding to the processing domain includes at least one of the following: the startup mode of the AI model, the start time of the AI model, the end time of the AI model, and the processing duration of the AI model.

Optionally, different processing domains correspond to respective processing time constraints.

Optionally, different processing domains correspond to respective processing modes.

Optionally, the radio frequency unit 701 is further configured to send, to a fourth end, a first request for requesting to register a first function, where
description information of the first function includes at least one of the following: the reference point corresponding to the first end, the processing mode, a relationship between the reference point and the processing mode, information about a processing domain, AI model information, a model connection relationship between AI models, and a startup mode of an AI model.

Optionally, the processor 710 is configured to: in a case that the second end requests a first function from a fourth end, process a first target object based on description information of the first function, or exchange third indication information with a sixth end, where the third indication information is used to instruct the sixth end to process a second target object based on the description information of the first function, and the sixth end is an entity having an association relationship with the first end, where
the description information of the first function includes at least one of the following: the reference point corresponding to the first function, the processing mode, a relationship between the reference point and the processing mode, information about a processing domain, AI model information, a model connection relationship between AI models, and a startup mode of an AI model.

Optionally, the processor 710 is further configured to perform at least one of the following:
in a case that the description information of the first function includes the reference point corresponding to the first end, processing, by the first end, the third target object at the reference point;
in a case that the description information of the first function includes the relationship between the reference point and the processing mode, processing, by the first end, the third target object at the reference point based on the corresponding processing mode;
in a case that the description information of the first function includes the processing domain, obtaining, by the first end, a target reference point included in the processing domain, and processing the third target object at the target reference point;
in a case that the description information of the first function includes the processing mode, processing, by the first end, the third target object based on the processing mode;
in a case that the description information of the first function includes the AI model information, determining, by the first end, a target AI model based on the AI model information, and processing the third target object based on the target AI model;
in a case that the description information of the first function includes the model connection relationship between the AI models, determining, by the first end, the target AI model based on the connection relationship between the AI models, and processing the third target object based on the target AI model; and
in a case that the description information of the first function includes the startup mode of the AI model, determining, by the first end, the target AI model based on the startup mode of the AI model, and starting the target AI model based on the startup mode of the AI model to process the third target object.

Optionally, the radio frequency unit 701 is further configured to: in a case that the description information of the first function is updated, send updated description information of the first function to at least one of the fourth end and the second end.

Optionally, the radio frequency unit 701 is further configured to send, to a fifth end, a second request for requesting to register a first mode, where
description information of the first mode includes at least one of the following: the reference point corresponding to the first mode, the processing mode, a relationship between the reference point and the processing mode, information about a processing domain, AI model information, a model connection relationship between AI models, and a startup mode of an AI model.

Optionally, the processor 710 is further configured to: in a case that the second end requests a first mode from a fifth end, process a third target object based on a target mode, where the target mode is to process a fourth target object based on description information of the first mode, where
the description information of the first mode includes at least one of the following: the reference point corresponding to the first mode, the processing mode, a relationship between the reference point and the processing mode, information about a processing domain, AI model information, a model connection relationship between AI models, and a startup mode of an AI model.

Optionally, the radio frequency unit 701 is further configured to: in a case that the description information of the first mode is updated, send updated description information of the first mode to at least one of the fifth end and the second end.

Optionally, the first indication information is further used to indicate at least one of a test mode and a test requirement for the reference point.

Optionally, the processor 710 is further configured to test the reference point based on at least one of the test mode and the test requirement.

In another implementation of this embodiment of this application, the terminal 700 is a second end.

The radio frequency unit 701 is configured to receive first indication information, where the first indication information is used to indicate a processing mode of a target object at a reference point.

The processor 710 is configured to process the target object at the reference point based on the processing mode.

Optionally, the reference point is determined based on at least one of the following:
a predefinition;
a protocol agreement; and
second indication information sent by a third end, where the second indication information is used to indicate the reference point.

Optionally, the processing mode includes either of the following:
a processing mode based on an artificial intelligence AI model; and
a processing mode determined by a target end, where the target end is a first end or the second end.

Optionally, the processing mode based on the AI model is indicated by at least one of the following:
a model connection relationship between AI models;
a startup mode of the AI model; and
information about a processing domain, where the processing domain includes the reference point.

Optionally, the model connection relationship between the AI models includes at least one of the following:
a processing order of the AI models; and
an input-output relationship between the AI models.

Optionally, the processor 710 is further configured to perform at least one of the following:
in a case that the model connection relationship between the AI models includes the processing order of the AI models, determining a first application AI model according to the processing order of the AI models, and starting the first application AI model according to the processing order of the AI models to process the target object; and
in a case that the model connection relationship between the AI models includes the input-output relationship between the AI models, determining a second application AI model based on the input-output relationship between the AI models, and processing the target object by using the second application AI model.

Optionally, the first indication information includes first target information, the first target information is used to indicate the model connection relationship between the AI models, and the first target information includes at least one of the following:
a model identifier used to indicate an AI model used by the target end, where the target end includes at least one of the first end and the second end; and
a model connection identifier used to indicate a connection relationship between different AI models.

Optionally, the first target information includes model configuration information, and the model configuration information includes the model identifier; and
the model configuration information is further used to configure an input of the AI model to cite a first object, and the first object includes at least one of the following: a preset reference point and an output of another AI model.

Optionally, in a case that there are a plurality of preset reference points, the plurality of preset reference points are arranged in a preset order.

Optionally, the startup mode of the AI model includes at least one of the following:
startup based on a preset start time;
startup in a case that data of at least one reference point corresponding to the AI model arrives;
startup in a case that data of at least one reference point in the data of the at least one reference point corresponding to the AI model is updated;
startup in a case that all inputs required by the AI model arrive;
startup in a case that at least one preset AI model completes processing;
startup in a case that an output of at least one preset AI model is updated;
startup in a case that the AI model receives an input from a previous AI model; and
startup in a case that the AI model receives a preset output value from another AI model.

Optionally, at least one AI model is started.

Optionally, there is at least one processing domain, and the processing domain is determined by at least one of the following:
a function of the reference point;
a relationship between an input/output of the AI model and the reference point; and
the model connection relationship between the AI models.

Optionally, the information about the processing domain includes at least one of the following:
a processing time constraint corresponding to the processing domain; and
a processing mode corresponding to the processing domain.

Optionally, the processing mode corresponding to the processing domain includes at least one of the following: the startup mode of the AI model, a start time of the AI model, an end time of the AI model, and processing duration of the AI model.

Optionally, the processing time constraint corresponding to the processing domain includes at least one of the following: the startup mode of the AI model, the start time of the AI model, the end time of the AI model, and the processing duration of the AI model.

Optionally, different processing domains correspond to respective processing time constraints.

Optionally, different processing domains correspond to respective processing modes.

Optionally, the radio frequency unit 701 is further configured to: send, to a fourth end, a first service request for requesting a first function; and
receive description information that is of the first function and that is sent by the fourth end; and
the processor 710 is further configured to process the target object based on the description information of the first function, where
the description information of the first function includes at least one of the following: the reference point corresponding to a first end, the processing mode, a relationship between the reference point and the processing mode, information about a processing domain, AI model information, a model connection relationship between AI models, and a startup mode of an AI model.

Optionally, the processor 710 is further configured to perform at least one of the following:
in a case that the description information of the first function includes the reference point corresponding to the first end, processing the target object at the reference point;
in a case that the description information of the first function includes the relationship between the reference point and the processing mode, processing the target object at the reference point based on the corresponding processing mode;
in a case that the description information of the first function includes the information about the processing domain, obtaining a target reference point included in the processing domain, and processing the target object at the target reference point;
in a case that the description information of the first function includes the processing mode, processing the target object based on the processing mode;
in a case that the description information of the first function includes the AI model information, determining a target AI model based on the AI model information, and processing the target object based on the target AI model;
in a case that the description information of the first function includes the model connection relationship between the AI models, determining the target AI model based on the connection relationship between the AI models, and processing the target object based on the target AI model; and
in a case that the description information of the first function includes the startup mode of the AI model, determining the target AI model based on the startup mode of the AI model, and starting the target AI model based on the startup mode of the AI model to process the target object.

Optionally, the radio frequency unit 701 is further configured to:
receive updated description information that is of the first function and that is sent by at least one of the first end and the fourth end.

Optionally, the radio frequency unit 701 is further configured to: send a second service request to a fifth end, where the second service request is used for requesting a first mode; and
receive description information that is of the first mode and that is sent by the fifth end; and
the processor 710 is further configured to process the target object based on the description information of the first mode, where
the description information of the first mode includes at least one of the following: the reference point corresponding to the first mode, the processing mode, a relationship between the reference point and the processing mode, information about a processing domain, AI model information, a model connection relationship between AI models, and a startup mode of an AI model.

Optionally, the radio frequency unit 701 is further configured to:
receive updated description information that is of the first mode and that is sent by at least one of a first end and the fifth end.

Optionally, the first indication information is further used to indicate at least one of a test mode and a test requirement for the reference point.

Optionally, the processor 710 is further configured to test the reference point based on at least one of the test mode and the test requirement.

The terminal 700 provided in this embodiment of this application can exchange, with another communication device, the processing mode of the target object at the pre-agreed reference point, so that the communication device has higher flexibility in processing a signal, data, a service, or the like.

An embodiment of this application further provides a network-side device. Each implementation process and implementation of the foregoing method embodiment in FIG. 2 and FIG. 3 can be applied to the network-side device embodiment, with the same technical effect achieved.

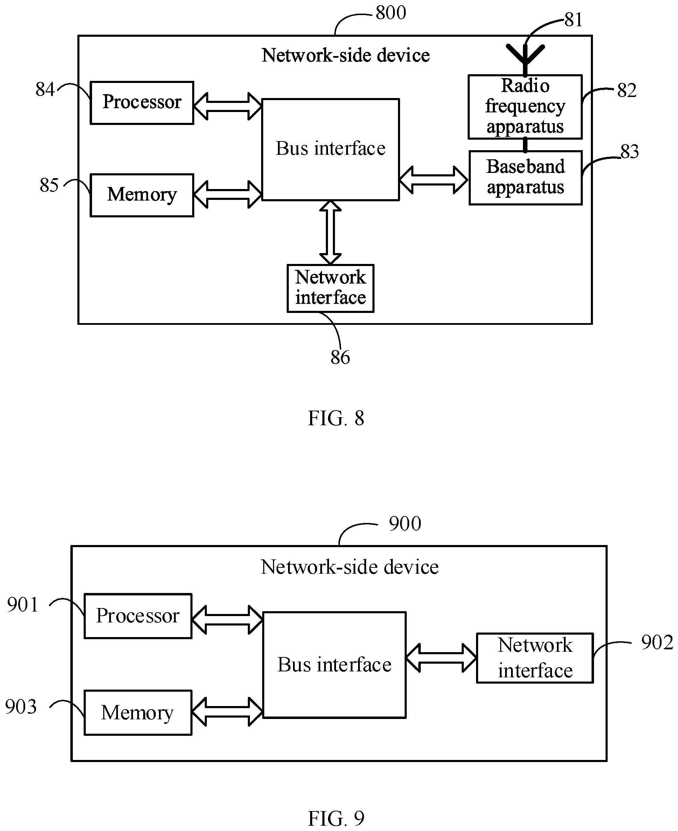

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The method performed by the network-side device in the foregoing embodiment may be implemented in the baseband apparatus 83. The baseband apparatus 83 includes a baseband processor.

The baseband apparatus 83 may include, for example, at least one baseband unit, where a plurality of chips are disposed on the baseband unit. As shown in FIG. 8, one of the chips is, for example, the baseband processor, connected to the memory 85 by using a bus interface, to invoke a program in the memory 85 to perform the operation of the network-side device shown in the foregoing method embodiment.

The network-side device may further include a network interface 86, where the interface is, for example, a common public radio interface (common public radio interface, CPRI).

Specifically, the network-side device 800 in this embodiment of this application further includes a program or instructions stored in the memory 85 and capable of running on the processor 84. When the processor 84 invokes the program or instructions in the memory 85, the method performed by each module shown in FIG. 4 or FIG. 5 is performed, with the same technical effect achieved. To avoid repetition, details are not described herein again.

Specifically, an embodiment of this application further provides another network-side device. As shown in FIG. 9, the network-side device 900 includes a processor 901, a network interface 902, and a memory 903. The network interface 902 is, for example, a common public radio interface (common public radio interface, CPRI).

Specifically, the network-side device 900 in this embodiment of this application further includes a program or instructions stored in the memory 903 and capable of running on the processor 901. When the processor 901 invokes the program or instructions in the memory 903, the method performed by each module shown in FIG. 4 or FIG. 5 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment in FIG. 2 or FIG. 3 is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing method embodiment in FIG. 2 or FIG. 3, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program product. The computer program product is stored in a non-transitory storage medium. The computer program product is executed by at least one processor to implement each process of the foregoing method embodiment in FIG. 2 or FIG. 3, with the same technical effect achieved. To avoid repetition, details are not described herein again.

An embodiment of this application further provides a communications system, including a terminal and a network-side device. The terminal may be configured to perform the steps of the foregoing method in FIG. 2, and the network-side device may be configured to perform the steps of the foregoing method in FIG. 3. Alternatively, the terminal may be configured to perform the steps of the foregoing method in FIG. 3, and the network-side device may be configured to perform the steps of the foregoing method in FIG. 2.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.
The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A communication method, comprising:
receiving, by a second end, first indication information, wherein the first indication information is used to indicate a processing mode of a target object at a reference point; and
processing, by the second end, the target object at the reference point based on the processing mode.

2. The method according to claim 1, wherein the reference point is determined based on at least one of the following:
a predefinition;
a protocol agreement; and
second indication information sent by a third end, wherein the second indication information is used to indicate the reference point.

3. The method according to claim 1, wherein the processing mode comprises either of the following:
a processing mode based on an artificial intelligence AI model; and
a processing mode determined by a target end, wherein the target end comprises the second end.

4. The method according to claim 3, wherein the processing mode based on the AI model is indicated by at least one of the following:
a model connection relationship between AI models;
a startup mode of the AI model; and
information about a processing domain corresponding to the AI model, wherein the processing domain comprises the reference point.

5. The method according to claim 4, wherein the model connection relationship between the AI models comprises at least one of the following:
a processing order of the AI models; and
an input-output relationship between the AI models.

6. The method according to claim 5, wherein the processing, by the second end, the target object at the reference point based on the processing mode comprises at least one of the following:
in a case that the model connection relationship between the AI models comprises the processing order of the AI models, determining, by the second end, a first application AI model according to the processing order of the AI models, and starting the first application AI model according to the processing order of the AI models to process the target object; and
in a case that the model connection relationship between the AI models comprises the input-output relationship between the AI models, determining, by the second end, a second application AI model based on the input-output relationship between the AI models, and processing the target object by using the second application AI model.

7. The method according to claim 4, wherein the first indication information comprises first target information used to indicate the model connection relationship between the AI models, and the first target information comprises at least one of the following:
a model identifier used to indicate an AI model used by the target end, wherein the target end comprises the second end; and
a model connection identifier used to indicate a connection relationship between different AI models.

8. The method according to claim 7, wherein the first target information comprises model configuration information, and the model configuration information comprises the model identifier; and
the model configuration information is further used to configure an input of the AI model to cite a first object, and the first object comprises at least one of the following: a preset reference point and an output of another AI model.

9. The method according to claim 4, wherein the startup mode of the AI model comprises at least one of the following:
startup based on a preset start time;
startup in a case that data of at least one reference point corresponding to the AI model arrives;
startup in a case that data of at least one reference point in the data of the at least one reference point corresponding to the AI model is updated;
startup in a case that all inputs required by the AI model arrive;
startup in a case that at least one preset AI model completes processing;
startup in a case that an output of at least one preset AI model is updated;
startup in a case that the AI model receives an input from a previous AI model; and
startup in a case that the AI model receives a preset output value from another AI model.

10. The method according to claim 9, wherein at least one AI model is started.

11. The method according to claim 4, wherein there is at least one processing domain, and the processing domain is determined by at least one of the following:
a function of the reference point;
a relationship between an input/output of the AI model and the reference point; and
the model connection relationship between the AI models.

12. The method according to claim 4, wherein the information about the processing domain comprises at least one of the following:
a processing time constraint corresponding to the processing domain; and
a processing mode corresponding to the processing domain.

13. The method according to claim 12, wherein the processing time constraint corresponding to the processing domain or the processing mode corresponding to the processing domain comprises at least one of the following: the startup mode of the AI model, a start time of the AI model, an end time of the AI model, and processing duration of the AI model.

14. The method according to claim 12, wherein different processing domains correspond to respective processing time constraints.

15. The method according to claim 12, wherein different processing domains correspond to respective processing modes.

16. The method according to claim 1, wherein the method further comprises:
sending, by the second end to a fourth end, a first service request for requesting a first function;
receiving, by the second end, description information that is of the first function and that is sent by the fourth end; and
processing, by the second end, the target object based on the description information of the first function, wherein
the description information of the first function comprises at least one of the following: the reference point corresponding to a first end, the processing mode, a relationship between the reference point and the processing mode, information about a processing domain, AI model information, a model connection relationship between AI models, and a startup mode of an AI model.

17. The method according to claim 16, wherein the processing, by the second end, the target object based on the description information of the first function comprises at least one of the following:
in a case that the description information of the first function comprises the reference point corresponding to the first end, processing, by the second end, the target object at the reference point;
in a case that the description information of the first function comprises the relationship between the reference point and the processing mode, processing, by the second end, the target object at the reference point based on the corresponding processing mode;
in a case that the description information of the first function comprises the information about the processing domain, obtaining, by the second end, a target reference point comprised in the processing domain, and processing the target object at the target reference point;
in a case that the description information of the first function comprises the processing mode, processing, by the second end, the target object based on the processing mode;
in a case that the description information of the first function comprises the AI model information, determining, by the second end, a target AI model based on the AI model information, and processing the target object based on the target AI model;
in a case that the description information of the first function comprises the model connection relationship between the AI models, determining, by the second end, the target AI model based on the connection relationship between the AI models, and processing the target object based on the target AI model; and
in a case that the description information of the first function comprises the startup mode of the AI model, determining, by the second end, the target AI model based on the startup mode of the AI model, and starting the target AI model based on the startup mode of the AI model to process the target object.

18. The method according to claim 16, wherein the method further comprises:
receiving, by the second end, updated description information that is of the first function and that is sent by at least one of the first end and the fourth end.

19. The method according to claim 1, wherein the method further comprises:
sending, by the second end to a fifth end, a second service request for requesting a first mode;
receiving, by the second end, description information that is of the first mode and that is sent by the fifth end; and
processing, by the second end, the target object based on the description information of the first mode, wherein
the description information of the first mode comprises at least one of the following: the reference point corresponding to the first mode, the processing mode, a relationship between the reference point and the processing mode, information about a processing domain, AI model information, a model connection relationship between AI models, and a startup mode of an AI model.

20. The method according to claim 19, wherein the method further comprises:
receiving, by the second end, updated description information that is of the first mode and that is sent by at least one of a first end and the fifth end.

21. The method according to claim 1, wherein the first indication information is further used to indicate at least one of a test mode and a test requirement for the reference point.

22. The method according to claim 21, wherein the method further comprises:
testing, by the second end, the reference point based on at least one of the test mode and the test requirement.

23. A communication method, comprising:
exchanging, by a first end with at least one second end, first indication information corresponding to a reference point, wherein the first indication information is used to indicate a processing mode of a target object at the reference point.

24. The method according to claim 23, wherein the reference point is determined based on at least one of the following:
a predefinition;
a protocol agreement; and
second indication information sent by a third end, wherein the second indication information is used to indicate the reference point.

25. The method according to claim 23, wherein the processing mode comprises either of the following:
a processing mode based on an artificial intelligence AI model; and
a processing mode determined by a target end, wherein the target end is the first end or the second end.

26. The method according to claim 25, wherein the processing mode based on the AI model is indicated by at least one of the following:
a model connection relationship between AI models;
a startup mode of the AI model; and
information about a processing domain corresponding to the AI model, wherein the processing domain comprises the reference point.

27. The method according to claim 23, wherein the method further comprises:
sending, by the first end to a fourth end, a first request for requesting to register a first function, wherein
description information of the first function comprises at least one of the following: the reference point corresponding to the first function, the processing mode, a relationship between the reference point and the processing mode, information about a processing domain, AI model information, a model connection relationship between AI models, and a startup mode of an AI model.

28. The method according to claim 23, wherein the method further comprises:
in a case that the second end requests a first function from a fourth end, processing, by the first end, a first target object based on description information of the first function, or exchanging, by the first end, third indication information with a sixth end, wherein the third indication information is used to instruct the sixth end to process a second target object based on the description information of the first function, and the sixth end is an entity having an association relationship with the first end, wherein
the description information of the first function comprises at least one of the following: the reference point corresponding to the first function, the processing mode, a relationship between the reference point and the processing mode, information about a processing domain, AI model information, a model connection relationship between AI models, and a startup mode of an AI model.

29. The method according to claim 28, wherein the processing, by the first end, a first target object based on description information of the first function comprises at least one of the following:
in a case that the description information of the first function comprises the reference point corresponding to the first end, processing, by the first end, the first target object at the reference point;
in a case that the description information of the first function comprises the relationship between the reference point and the processing mode, processing, by the first end, the first target object at the reference point based on the corresponding processing mode;
in a case that the description information of the first function comprises the processing domain, obtaining, by the first end, a reference point comprised in the processing domain, and processing the first target object at the reference point;
in a case that the description information of the first function comprises the processing mode, processing, by the first end, the first target object based on the processing mode;
in a case that the description information of the first function comprises the AI model information, determining, by the first end, a target AI model based on the AI model information, and processing the first target object based on the target AI model;
in a case that the description information of the first function comprises the model connection relationship between the AI models, determining, by the first end, the target AI model based on the connection relationship between the AI models, and processing the first target object based on the target AI model; and
in a case that the description information of the first function comprises the startup mode of the AI model, determining, by the first end, the target AI model based on the startup mode of the AI model, and starting the target AI model based on the startup mode of the AI model to process the first target object.

30. The method according to any one of claims 27 to 29, wherein the method further comprises:
in a case that the description information of the first function is updated, sending, by the first end, updated description information of the first function to at least one of the fourth end and the second end.

31. The method according to claim 23, wherein the method further comprises:
sending, by the first end to a fifth end, a second request for requesting to register a first mode, wherein
description information of the first mode comprises at least one of the following: the reference point corresponding to the first mode, the processing mode, a relationship between the reference point and the processing mode, information about a processing domain, AI model information, a model connection relationship between AI models, and a startup mode of an AI model.

32. The method according to claim 23, wherein the method further comprises:
in a case that the second end requests a first mode from a fifth end, processing, by the first end, a third target object based on a target mode, wherein the target mode is to process a fourth target object based on description information of the first mode, wherein
the description information of the first mode comprises at least one of the following: the reference point corresponding to the first mode, the processing mode, a relationship between the reference point and the processing mode, information about a processing domain, AI model information, a model connection relationship between AI models, and a startup mode of an AI model.

33. The method according to claim 31 or 32, wherein the method further comprises:
in a case that the description information of the first mode is updated, sending, by the first end, updated description information of the first mode to at least one of the fifth end and the second end.

34. The method according to claim 23, wherein the first indication information is further used to indicate at least one of a test mode and a test requirement for the reference point.

35. The method according to claim 34, wherein the method further comprises:
testing, by the first end, the reference point based on at least one of the test mode and the test requirement.

36. A communication apparatus, comprising:
a receiving module, configured to receive first indication information, wherein the first indication information is used to indicate a processing mode of a target object at a reference point; and
a processing module, configured to process the target object at the reference point based on the processing mode.

37. A communication apparatus, comprising:
a sending module, configured to exchange, with at least one second end, first indication information corresponding to a reference point, wherein the first indication information is used to indicate a processing mode of a target object at the reference point.

38. A communication device, comprising a processor and a memory, wherein the memory stores a program or instructions capable of running on the processor, and when the program or instructions are executed by the processor, the steps of the communication method according to any one of claims 1 to 22 are implemented, or the steps of the communication method according to any one of claims 23 to 35 are implemented.

39. A readable storage medium, wherein the readable storage medium stores a program or instructions, and when the program or instructions are executed by a processor, the steps of the communication method according to any one of claims 1 to 22 are implemented, or the steps of the communication method according to any one of claims 23 to 35 are implemented.
